# EUROPÄISCHE PATENTSCHRIFT

(11) **EP 2 868 987 B1**
(45) Veröffentlichungstag und Bekanntmachung des Hinweises auf die Patenterteilung: **01.01.2020**
(21) Anmeldenummer: 14002192.4
(22) Anmeldetag: 26.06.2014
(51) Int. Cl.: F24F 3/16, F24F 3/14, B01D 46/52, B01D 46/10, B01D 46/00, A61L 9/00

(54) **Filterkonstruktion sowie diese umfassendes Filtersystem**
Filter structure and filter system comprising the same
Structure de filtre ainsi que système de filtre la contenant

(30) Priorität: 29.07.2013 KR 20130089787
(43) Veröffentlichungstag der Anmeldung: 06.05.2015
(73) Patentinhaber: Carl Freudenberg KG, 69469 Weinheim (DE)
(72) Erfinder: Hwang, Kyungho, Kyungki-do (KR); Cho, Sunguk, Kyungki-do (KR)

(56) Entgegenhaltungen:
- WO-A1-03/021154
- DE-A1-102004 025 274
- FR-A1- 2 920 349
- US-A1- 2003 052 791
- US-A1- 2007 261 376
- US-A1- 2011 139 006

## Beschreibung

Vorliegende Erfindung betrifft eine Filterkonstruktion sowie ein diese umfassendes Filtersystem, noch detaillierter, sie betrifft eine Filterkonstruktion sowie ein diese umfassendes Filtersystem, die so konstruiert sind, dass sie an einer Vorrichtung wie Luftreiniger, Klimaanlagen, Staubsauger oder Flüssigkeitsfiltersysteme installiert werden, durch die ein Luftstrom, nachdem er zugeführt wurde, wieder austritt, und Fremdkörper aus dem Luftstrom filtern.

Gebäude, Automobile, Staubsauger, Luftreiniger, Klimaanlagen sowie Flüssigkeitsfiltersysteme sind innen mit einem Filter ausgestattet, um alle Arten von Fremdkörpern wie Staub, die in zugeführter Luft oder Flüssigkeit enthalten sind, herauszufiltern.

Ein solcher Filter ist normalerweise aus Vliesstoff und zickzackförmig gefaltet.

US2011/1390006 A, US2007/261376A und FR2920349A gehören zu dem Stand der Technik.

Im Zusammenhang mit einem solchen Filter wird in dem von obigen Antragstellern beantragten und registrierten amerikanischen registrierten Patent Nr. 7,503, 954 ein Filterelement (Filter Element) vorgestellt, konkret betrifft es ein Filterelement aus Vliesstoff, das Filterelement umfasst ein zickzackförmig gefaltetes Filtergewebe (filter web), es wird in einen Aufnahmebereich wie einen Filterrahmen und/oder ein Filtergehäuse mit einer ebenen Wand an mindestens einer Schnittstelle eingesetzt, in Faltrichtung betrachtet hat es mindestens eine Schnittstelle an der Vorderseite, die Schnittstelle an der Vorderseite entspricht der ebenen Wand des Aufnahmebereichs, demzufolge hat es den Vorteil, dass die Schnittstelle an der Vorderseite des Filterelements nach außen konvex gewölbt ist, das Material des Filtergewebes so ausgewählt wird, dass beim Einsetzen in den Aufnahmebereich im Filtergewebe keine Falten entstehen und es durch die Anfangsdruckspannung die Wand der Schnittstelle des Aufnahmebereichs fest kontaktiert, und/oder die Regulierung (Conditioning) an der Schnittstelle der Vorderseite stattfindet.

Aber bei herkömmlichen Filtern einschließlich des amerikanischen registrierten Patents Nr. 7,503,954 gibt es das Problem, dass sich nach einer bestimmten Zeit an der Oberfläche der Seite, an der der Luftstrom zugeführt wird, Fremdkörper wie Staub etc. sammeln, dadurch werden die Löcher des Filters verstopft und die Filtrationseffizienz verschlechtert sich, flüssige Fremdkörper oder Fremdkörper aus Feststoffen, die sich im Filter abgelagert haben, verfaulen, wodurch in dem gefilterten Luftstrom Verschmutzungen oder Gerüche entstehen.

Andererseits werden in dem von obigen Antragstellern beantragten und registrierten amerikanischen registrierten Patent Nr. 6,894,620 eine Methode sowie eine Vorrichtung zur Überwachung der Lebensdauer eines Filters (Method and device for monitoring the service life of a filter) vorgestellt, konkret ein Filter in einer in einem Ventilator installierten Filtervorrichtung, insbesondere eine Methode zur Überwachung der Lebensdauer eines Filters in der Klimaanlage eines Automobils, in diesem Fall sind sie wünschenswerter so konstruiert, dass bei jeglichem Betrieb der Vorrichtung die tatsächliche Luftgeschwindigkeit im unteren Bereich des Filters durch einen Sensor gemessen wird, mit der normalen Luftgeschwindigkeit des nicht in Betrieb befindlichen Filters verglichen wird und an die Service-Vorrichtung übermittelt wird und/oder auf der Anzeigevorrichtung angezeigt wird, und, falls der vorab festgelegte Grenzwert oder Grenzbereich der tatsächlichen Luftgeschwindigkeit nicht erreicht wird, ein Signal zum Austausch des Filters ausgelöst wird.

Es gibt jedoch das Problem, dass bei Verwendung des Filters zwischen dem Rand des Filters und der Filtervorrichtung, in der der Filter installiert ist, ein Spalt entstehen kann und durch diesen Spalt eine Veränderung des Luftstroms entstehen kann, und weil bei herkömmlichen Filtervorrichtungen ein Sensor die durch diesen Spalt entstehende Veränderung des Luftstrom misst, treten Messfehler auf und der Sensor kann demzufolge das Auswechselintervall des Filters nicht messen.

Aufgabe der vorliegenden Erfindung ist die Zurverfügungstellung einer Filterkonstruktion sowie eines diese umfassenden Filtersystems, dem die Funktion von Duftstoffen, antibakteriellen Stoffen sowie feuchtigkeitsabsorbierenden Stoffen hinzugefügt wird, bei dem das Filtern im gesamten Bereich, in dem der Luftstrom sich bewegt, durchgeführt wird und mit dem einfach und effektiv das Austauschintervall von Duftstoffen etc. gemessen werden kann.

Obige Aufgabe wird entsprechend vorliegender Erfindung durch eine Filterkonstruktion gelöst, die dadurch gekennzeichnet ist, dass sie einen aus zickzackförmigen Falten kontinuierlich gebildeten 1. Faltbereich; einen 2. Faltbereich, der mit obigem 1. Faltbereich direkt verbunden ist, aus zickzackförmigen Falten kontinuierlich gebildet wird und zur Bereitstellung eines Einsatzbereichs flacher geformt ist als obiger 1. Faltbereich; zwei Abschlussbereiche, die mit zwei Schnittstellen in Faltrichtung des obigen 1. Faltbereichs sowie des 2. Faltbereichs verbunden sind; sowie ein Diffusionselement, das in obigen Einsatzbereich eingesetzt wird, umfasst und der durch obigen 2. Faltbereich gefilterte Luftstrom durch obiges Diffusionselement hindurchgeht.

Obiges Diffusionselement kann durch obigen 1. Faltbereich sowie die beiden Abschlussbereiche umschlossen werden.

Obiges Diffusionselement kann zwischen obigen beiden Abschlussbereichen fest eingesetzt werden.

Obiges Diffusionselement kann an mehr als einem obigen 1. Faltbereich sowie Abschlussbereich durch Befestigungsmittel befestigt werden.

Obige Befestigungsmittel können aus Klettband (Velcro), beidseitigem Klebeband oder Klebstoff bestehen.

Obiges Diffusionselement kann so konstruiert sein, dass es in Filtrierrichtung des Luftstroms nicht weiter hervorspringt als obiger 1. Faltbereich oder obige Abschlussbereiche.

Obiges Diffusionselement kann so konstruiert sein, dass es aus funktionalem Diffusionsmaterial, das durch den Luftstrom diffundiert; sowie aus einer Kassette besteht, die obiges funktionales Diffusionsmaterial im Inneren aufnimmt und an deren Oberfläche mehrere durchgehende Löcher geformt sind.

Obiges funktionales Diffusionsmaterial kann aus Duftstoffen, antibakteriellen Stoffen oder feuchtigkeitsabsorbierenden Stoffen bestehen.

Obige Kassette kann innen mehr als 2 voneinander getrennte Aufnahmekammern besitzen, damit jeweils unterschiedliches obiges funktionales Diffusionsmaterial aufgenommen werden kann.

Die zickzackförmigen Falten des obigen 1. Faltbereichs sowie 2. Faltbereichs können so konstruiert sein, dass sie in der Höhe an der Seite des obigen Einsatzbereichs jeweils gleich sind und an der anderen Seite des obigen Einsatzbereichs in der Höhe alle gleich sind.

Ferner wird obiger Zweck durch ein Filtersystem erreicht, das dadurch gekennzeichnet ist, dass es oben erläuterte Filterkonstruktion; einen Messsensor für das Diffusionsmaterial, der an einer Seite des Filterkanals, in dem obige Filterkonstruktion installiert ist, installiert wird und den durch obige Filterkonstruktion hindurchgehenden Luftstrom misst; einen Kontrollbereich, in den die Messwerte des obigen Messsensors für das Diffusionsmaterial eingegeben werden; sowie einen Anzeigebereich, der durch obigen Kontrollbereich obige Messwerte anzeigt, umfasst.

Gemäß vorliegender Erfindung wird das Filtern im ganzen Bereich, in dem sich der Luftstrom bewegt, durchgeführt, dadurch dass sie mit einem Diffusionselement ausgestattet ist, das in den Einsatzbereich eingesetzt wird, und die Funktion von Duftstoffen, antibakteriellen Stoffen sowie feuchtigkeitsabsorbierenden Stoffen hinzugefügt wird, und das Austauschintervall der Duftstoffe etc. kann einfach und effektiv gemessen werden, dadurch dass sie mit einem Messsensor für das Diffusionsmaterial ausgestattet ist, der am Ausstoßweg des Filterkanals, in dem obige Filterkonstruktion installiert ist, installiert wird und den durch die Filterkonstruktion hindurchgehenden Luftstrom misst.
Fig. 1 zeigt anhand eines Ausführungsbeispiels vorliegender Erfindung eine Filterkonstruktion im montierten Zustand.
Fig. 2 zeigt die Gesamtkonstruktion der in Fig. 1 dargestellten Filterkonstruktion.
Fig. 3 zeigt anhand eines anderen Ausführungsbeispiels vorliegender Erfindung eine Filterkonstruktion im montierten Zustand.
Fig. 4 sowie Fig. 5 zeigen anhand von weiteren Ausführungsbeispielen vorliegender Erfindung eine Filterkonstruktion im montierten Zustand.
Fig. 6a zeigt einen Querschnitt des 1. Faltbereichs sowie des 2. Faltbereichs der in Fig. 1 dargestellten Filterkonstruktion.
Fig. 6b sowie Fig. 6c zeigen einen Querschnitt des 1. Faltbereichs sowie des 2. Faltbereichs der in Fig. 3 dargestellten Filterkonstruktion.
Fig. 6d zeigt einen Querschnitt des 1. Faltbereichs sowie des 2. Faltbereichs der in Fig. 4 dargestellten Filterkonstruktion.
Fig. 7a sowie Fig. 7b zeigen einen Querschnitt des Diffusionselements der in Fig. 1 dargestellten Filterkonstruktion.
Fig. 8 zeigt den Zustand, bei dem die in Fig. 1 dargestelite Filterkonstruktion im Filterkanal installiert ist.
Fig. 9 ist eine Skizze, die ein Filtersystem zeigt, das eine Filterkonstruktion anhand eines weiteren Ausführungsbeispiels vorliegender Erfindung umfasst.

Nachstehend werden unter Verweis auf beigefügte Figuren wünschenswerte Ausführungsbeispiele der vorliegenden Erfindung detailliert erläutert. Es werden jedoch bei der Erläuterung der Erfindung bereits bekannte Funktionen oder Strukturen weggelassen, um die wesentlichen Punkte der vorliegenden Erfindung deutlich zu machen.

Bei der Filterkonstruktion sowie dem diese umfassenden Filtersystem der vorliegenden Erfindung wird das Filtern im gesamten Bereich, in dem der Luftstrom sich bewegt, durchgeführt und eine Funktion von Duftstoffen, antibakteriellen Stoffen sowie feuchtigkeitsabsorbierenden Stoffen hinzugefügt, und das Auswechselintervall für Duftstoffe etc. wird einfach und effektiv gemessen.

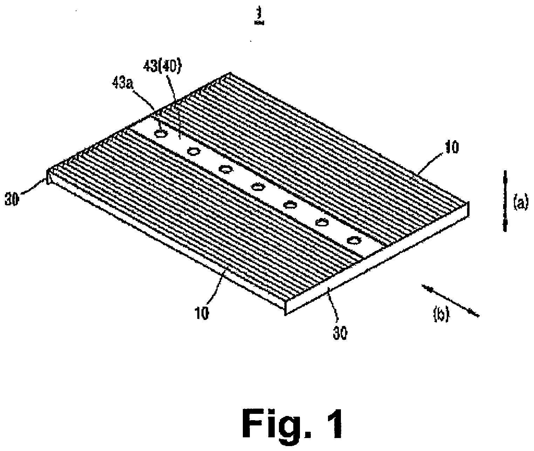

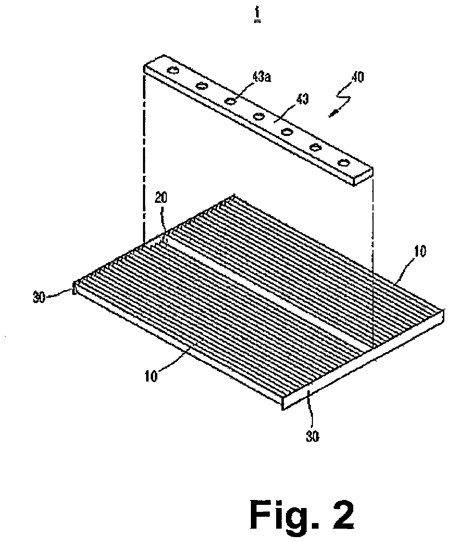

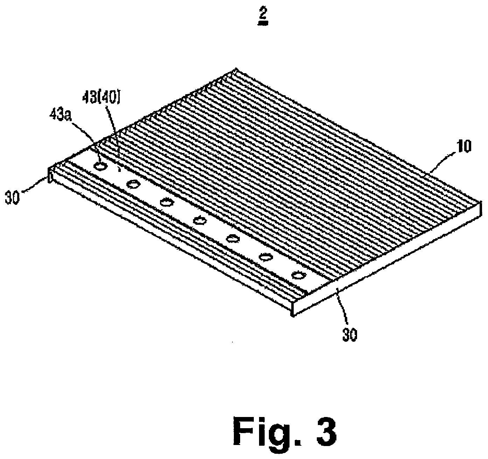

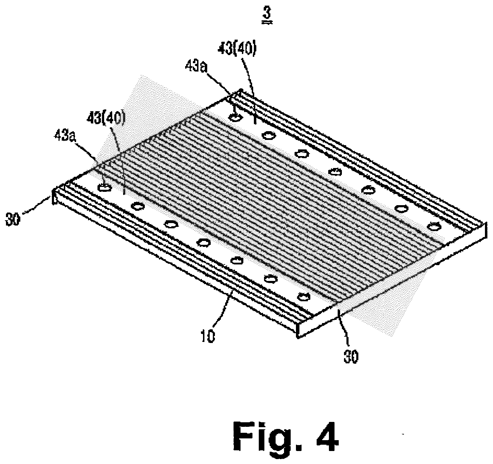

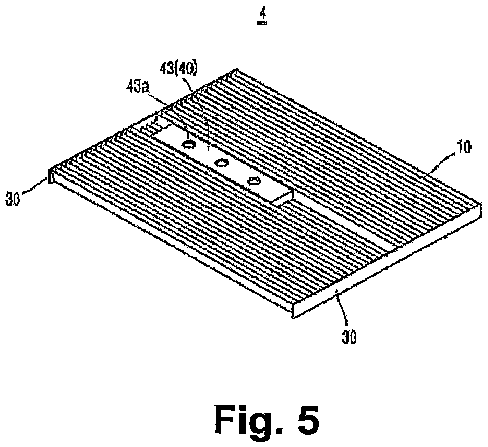

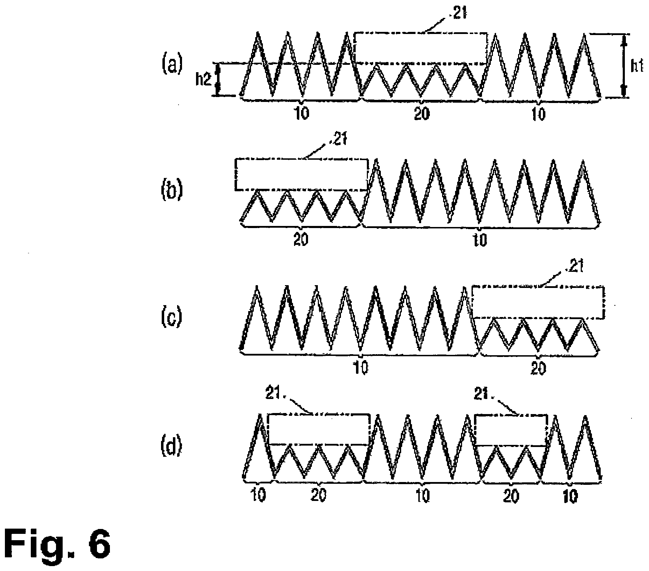

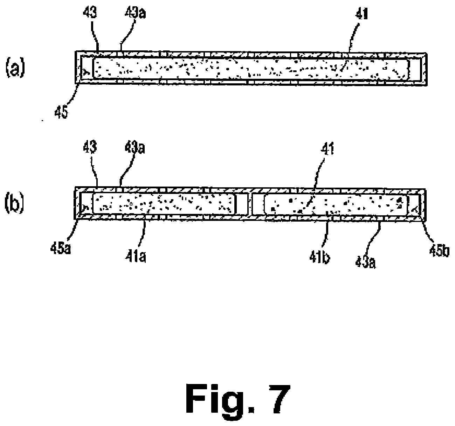

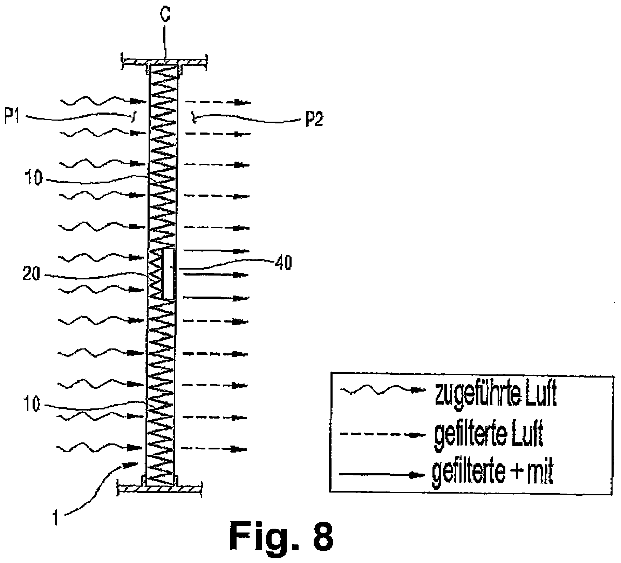

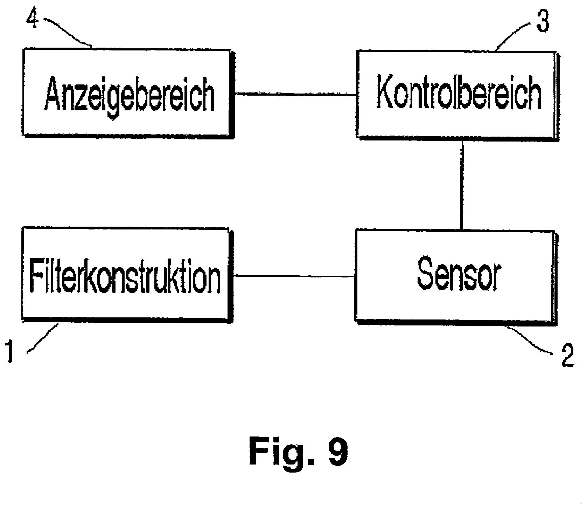

Fig. 1 zeigt anhand eines Ausführungsbeispiels vorliegender Erfindung die Filterkonstruktion im montierten Zustand, Fig. 2 zeigt die Gesamtkonstruktion der in Fig. 1 dargestellten Filterkonstruktion, Fig. 3 zeigt anhand eines anderen Ausführungsbeispiels vorliegender Erfindung die Filterkonstruktion im montierten Zustand, Fig. 4 sowie Fig. 5 zeigen anhand von weiteren Ausführungsbeispielen vorliegender Erfindung die Filterkonstruktion im montierten Zustand, Fig. 6a zeigt einen Querschnitt des 1. Faltbereichs sowie des 2. Faltbereichs der in Fig. 1 dargestellten Filterkonstruktion, Fig. 6b sowie Fig. 6c zeigen einen Querschnitt des 1. Faltbereichs sowie des 2. Faltbereichs der in Fig. 3 dargestellten Filterkonstruktion, Fig. 6d zeigt einen Querschnitt des 1. Faltbereichs sowie des 2. Faltbereichs der in Fig. 4 dargestellten Filterkonstruktion, Fig. 7a sowie Fig. 7b zeigen einen Querschnitt des Diffusionselements der in Fig. 1 dargestellten Filterkonstruktion, Fig. 8 zeigt den Zustand, bei dem die in Fig. 1 dargestellte Filterkonstruktion im Filterkanal installiert ist, Fig. 9 ist eine Skizze, die ein Filtersystem zeigt, das eine Filterkonstruktion entsprechend einem weiteren Ausführungsbeispiel vorliegender Erfindung umfasst.

Wie in Fig. 1 sowie Fig. 2 dargestellt, besteht die Filterkonstruktion 1 entsprechend vorliegender Erfindung aus einem 1. Faltbereich 10, einem 2. Faltbereich 20, einem Abschlussbereich 30 sowie einem Diffusionselement 40.

Bei der Erläuterung der Filterkonstruktion 1 entsprechend vorliegender Erfindung wird auf der Basis der Filterkonstruktion 1, wie sie in Fig. 1 dargestellt ist, die obere und untere Richtung (a) festgelegt und erläutert.

Der 1. Faltbereich 10 sowie der 2. Faltbereich 20 entsprechen den Teilen von herkömmlichen Filtern, sie können aus Vliesstoff bestehen und bilden zusammen einen Körper.

Der 1. Faltbereich 10 wird kontinuierlich aus zickzackförmigen Falten gebildet.

Die einzelnen gefalteten Teile der Oberseite sowie der Unterseite des 1. Faltbereichs 10 können eine unterschiedliche Höhe bilden, es ist jedoch wünschenswert, dass wie in Fig. 6a dargestellt eine einheitliche Höhe (h1) gebildet wird.

Der 2. Faltbereich 20 ist unter Verweis auf Fig. 6a mit dem 1. Faltbereich 10 direkt verbunden, er wird kontinuierlich aus zickzackförmigen Falten gebildet und ist in der Höhe (h2) niedriger als der 1. Faltbereich 10, um einen Einsatzbereich 21 zu formen. Das heißt, die Dicke (h1) des 1. Faltbereichs 10 und die Dicke (h2) des 2. Faltbereichs 20 sind unterschiedlich, konkret, die Dicke (h2) des Teils, den der 2. Faltbereich 20 bildet, ist dünner als die Dicke (h1) des Teils, den der 1. Faltbereich 10 bildet.

Auf diese Weise wird die Höhe des 2. Faltbereichs 20 niedriger gebildet als die Höhe des 1. Faltbereichs 10, wodurch der Einsatzbereich 21 in Form einer Einsenkung bereitgestellt wird, und unter Verweis auf Fig. 2 wird in einen solchen Einsatzbereich 21 das Diffusionselement 40 eingesetzt.

Die einzelnen gefalteten Teile der Oberseite sowie der Unterseite des 2. Faltbereichs 20 können eine unterschiedliche Höhe bilden, es ist jedoch wünschenswert, dass wie in Fig. 6a dargestellt eine einheitliche Höhe gebildet wird. Ferner ist es wünschenswert, dass die untere Seite des 2. Faltbereichs 20 und die untere Seite des 1. Faltbereichs 10 so konstruiert sind, dass sie gleich sind. Aber die obere Seite des 2. Faltbereichs 20 ist nicht gleich mit der oberen Seite des 1. Faltbereichs 10, sondern wie vorher erläutert, niedriger als die obere Seite des 1. Faltbereichs 10.

Der 2. Faltbereich 20 kann wie in Fig. 6a dargestellt, zwischen dem 1. Faltbereich 10 gebildet werden oder wie in Fig. 6b sowie 6c dargestellt an einer Seite des 1. Faltbereichs 10 gebildet werden, und wie in Fig. 6d dargestellt können der 1. Faltbereich 10 sowie der 2. Faltbereich 20 wiederholt gebildet werden. In Fig. 3 sowie Fig. 4 wird der Zustand gezeigt, in dem das Diffusionselement 40 auf der Oberseite des auf diese Weise an verschiedenen Stellen gebildeten 2. Faltbereichs 20 eingesetzt ist.

Wie in Fig. 1 sowie Fig. 2 dargestellt, wird der Abschlussbereich 30 mit beiden Schnittstellen in Faltrichtung (b) des 1. Faltbereichs 10 sowie des 2. Faltbereichs 20 verbunden. Der Abschlussbereich 30 besteht normalerweise aus einer flachen Leiste und wird mit beiden Schnittstellen des 1. Faltbereichs 10 sowie des 2. Faltbereichs 20 verbunden. Auf diese Weise wird der Abschlussbereich 30 mit den Schnittstellen des 1. Faltbereichs 10 sowie des 2. Faltbereichs 20 verbunden, wodurch der Faltzustand des 1. Faltbereichs 10 sowie des 2. Faltbereichs 20 erhalten bleibt und auch verhindert wird, dass sich die Filterkonstruktion 1 verdreht oder verändert.

Die Unterseite des Abschlussbereichs 30 ist entweder in der Höhe gleich wie die Unterseite des 1. Faltbereichs 10 sowie des 2. Faltbereichs 20 oder springt zur Unterseite etwas hervor, die Oberseite des Abschlussbereichs 30 ist entweder in der Höhe gleich wie die Oberseite des 1. Faltbereichs 10 oder springt zur Oberseite etwas hervor. Ein solcher Abschlussbereich 30 bildet an der Stelle, wo der 2. Faltbereich 20 gebildet wird, mit dem 1. Faltbereich 10 die Abgrenzung des Einsatzbereichs 21.

Unter Verweis auf Fig. 1, Fig. 2 sowie Fig. 7a besteht das Diffusionselement 40, das in den Einsatzbereich 21 eingesetzt wird, aus Diffusionsmaterial 41 sowie einer Kassette 43.

Das Diffusionsmaterial 41 kann aus Duftstoffen, antibakteriellen Stoffen oder feuchtigkeitsabsorbierenden Stoffen bestehen.

Die Kassette 43 nimmt innen das Diffusionsmaterial 41 auf und besteht normalerweise aus einer Box in Form eines Hexaeders, an beiden Seiten, die der Richtung des Luftstroms entsprechen, werden mehrere durchgehende Löcher 43a gebildet. Das Diffusionsmaterial 41, das innen in der Kassette 43 aufgenommen wird, wird beim Filtrieren durch diese durchgehenden Löcher 43a diffundiert und hat eine Duftfunktion, eine antibakterielle oder eine feuchtigkeitsabsorbierende Funktion.

Das Diffusionsmaterial 41 kann die Funktion haben, das Austauschintervall des 1. Faltbereichs 10 sowie des 2. Faltbereichs 20 zu signalisieren. Das heißt, das Diffusionsmaterial 41 wird als Duftstoff verwendet, und dadurch dass in die Aufnahmekammer 45 eine abgemessene Menge des Duftstoffs eingefüllt wird, die mit dem Anwendungszeitraum des 1. Faltbereichs 10 und des 2. Faltbereichs 20 übereinstimmt, kann der Verwender anhand des Geruchs das Austauschintervall des 1. Faltbereichs 10 sowie des 2. Faltbereichs 20 feststellen.

Wie in Fig. 7b dargestellt, können im Inneren der Kassette 43 mehr als 2 separate Aufnahmekammern 45 angeordnet sein. Das Innere der Kassette 43 kann in eine 1. Aufnahmekammer 45a sowie eine 2. Aufnahmekammer 45b unterteilt werden, so wird beispielsweise in der 1. Aufnahmekammer 45a ein Duftstoff 41a aufgenommen und in der 2. Aufnahmekammer 45b ein antibakterieller Stoff 41b aufgenommen, wodurch verhindert wird, dass sich der Duftstoff 41a und der antibakterielle Stoff 41b miteinander vermischen, und garantiert wird, dass das jeweilige Diffusionsmaterial effektiv funktionieren kann.

Dabei ist es selbstverständlich, dass an der 1. Aufnahmekammer 45a und der 2. Aufnahmekammer 45b die durchgehenden Löcher 43a jeweils separat gebildet werden.

Das Diffusionselement 40 wird bei im Einsatzbereich 21 eingesetzten Zustand von der Oberseite des 1. Faltbereichs 10 sowie des Abschlussmaterials umschlossen.

Wie in Fig. 8 dargestellt ist das Innere von Luftreinigem, Klimaanlagen, Staubsaugern oder Flüssigkeitsfiltersystemen mit einem Filterkanal (C) ausgestattet, durch den der zugeführte Luftstrom fließt, und die Filterkonstruktion 1 wird mit einer Seite des Filterkanals (C) verbunden.

Das Diffusionselement 40 ist so konstruiert, dass es wie in Fig. 1 sowie Fig. 6a dargestellt bei im Einsatzbereich 21 eingesetzten Zustand in Filtrierrichtung des Luftstroms nicht weiter hervorspringt als der 1. Faltbereich 10 sowie der Abschlussbereich 30. Demzufolge kommt beim Verbinden der Filterkonstruktion 1 mit dem Filterkanal (C) das Diffusionselement 40 mit dem Filterkanal (C) nicht in Berührung und die Filterkonstruktion 1 kann mit herkömmlichen Filterkanälen (C) verbunden werden, und nach dem Verbinden kommt das Diffusionselement 40 mit dem Filterkanal (C) in Berührung, wodurch bewirkt wird, dass eine Bewegung des Diffusionselements 40 in Fließrichtung des Luftstroms verhindert wird.

Unter Verweis auf Fig. 1, Fig. 2 sowie Fig. 6a ist es wünschenswert, dass das Diffusionselement 40 fest und exakt in den Einsatzbereich 21 eingesetzt wird. Das heißt, beide Seiten in Faltrichtung (b), die zum Abschlussbereich 30 des Diffusionselements 40 führen, kontaktieren jeweils die Innenfläche des Abschlussbereichs 30, und die beiden Seiten, die zum 1. Faltbereich 10 führen, kontaktieren die Schnittstelle des 1. Faltbereichs 10.

Das Diffusionselement 40 ist wie in Fig. 5 dargestellt in Faltrichtung (b) kurz geformt und kann daher nur durch beide Schnittstellen des 1. Faltbereichs 10 befestigt werden, dabei ist es wünschenswert, dass es durch nachstehend erklärte Befestigungsmittel befestigt wird.

Das heißt, zur stabilen Befestigung des Diffusionselements 40 kann das Diffusionselement 40 mit mehr als einem 1. Faltbereich 10 sowie Abschlussbereich 30 mit Befestigungsmitteln (nicht bezeichnet) befestigt werden. Das heißt, mehr als eine Randfläche des Diffusionselements 40 kann an dem 1. Faltbereich 10 sowie an dem Abschlussbereich 30 durch Befestigungsmittel befestigt werden.

Dabei können die Befestigungsmittel aus Klettband (Velcro), beidseitigem Klebeband oder Klebstoff bestehen.

Die zwischen dem 2. Faltbereich 20 und dem Diffusionselement 40 verwendeten Befestigungsmittel können, weil sie den Fluss des Luftstroms behindern, die Funktionen des 2. Faltbereichs 20 sowie des Diffusionselements 40 verschlechtern, daher ist es wünschenswert, dass die Befestigungsmittel zwischen dem Diffusionselement 40 und dem 2. Faltbereich 20 nicht verwendet werden.

Wie oben erwähnt kann eine Filterkonstruktion 1 entsprechend vorliegender Erfindung so konstruiert sein, dass durch das Diffusionselement 40, insbesondere durch die Abnahme des Duftstoffs, das Austauschintervall der Filterkonstruktion 1 erkannt werden kann oder aber durch einen Messsensor 2 die Diffusionsmenge des Diffusionselements 40 gemessen wird, wodurch der Austauschzeitpunkt der Filterkonstruktion 1 angezeigt wird.

Wie in Fig. 9 dargestellt besteht ein Filtersystem entsprechend einem anderen Ausführungsbeispiel vorliegender Erfindung aus einer Filterkonstruktion 1, einem Messsensor für das Diffusionsmaterial 2, einem Kontrollbereich 3 sowie einem Anzeigebereich 4.

Der Luftstrom, der dem Filterkanal (C) zugeführt wird, geht unter Verweis auf Fig. 8 durch die Filterkonstruktion 1 hindurch und wird gefiltert, dabei geht der Luftstrom, der durch den 2. Faltbereich 20 hindurchgeht, wieder durch das Diffusionselement 40 hindurch und nimmt dadurch das Diffusionsmaterial 41 auf.

Der Messsensor für das Diffusionsmaterial 2 wird an einer Seite des Ausstoßwegs (P2) des Filterkanals (C), in dem der durch die Filterkonstruktion 1 hindurchgegangene und gefilterte Luftstrom fließt, installiert und misst das Diffusionsmaterial 41 des durch die Filterkonstruktion 1 hindurchgegangenen Luftstroms. Der Messsensor für das Diffusionsmaterial 2 misst die Dichte der Duftstoffe, der antibakteriellen Stoffe oder der feuchtigkeitsabsorbierenden Stoffe, die in dem durch den Ausstoßweg (P2) fließenden gefilterten Luftstrom enthalten sind. Die nicht erklärte Ziffer P1 zeigt den Zufuhrweg des Filterkanals (C).

Der Kontrollbereich 3 ist mit dem Messsensor für das Diffusionsmaterial 2 verbunden und empfängt die Signale des Messsensors für das Diffusionsmaterial 2. Der Kontrollbereich 3 wandelt entsprechend den bereits programmierten Kontrollbefehlen die Signale des Messsensors für das Diffusionsmaterial 2 um, und die Signale werden durch den Anzeigebereich 4 angezeigt.

Der Anzeigebereich 4 ist an einer Seite der Vorrichtung, durch die der Luftstrom, nachdem er zugeführt wurde, wieder austritt wie Luftreiniger, Klimaanlagen, Staubsauger und Flüssigkeitsfiltersysteme, installiert und zeigt die durch den Kontrollbereich 3 umgewandelten Signale des Messsensors für das Diffusionsmaterial 2 an. Die Anzeige ist in visueller Form möglich als Menge des Diffusionsmaterials 41, Austauschzeitpunkt, Warnung etc. und auch in akustischer Form als Meldesignal oder Warnsignal. Der Verwender kann durch den Anzeigebereich 4 das Austauschintervall der Filterkonstruktion 1 einfach feststellen.

Gemäß vorliegender Erfindung wird das Filtern in dem ganzen Bereich, in dem sich der Luftstrom bewegt, durchgeführt, dadurch dass sie mit einem Diffusionselement 40 ausgestattet ist, das in den Einsatzbereich 21 eingesetzt wird, und eine Funktion von Duftstoffen, antibakteriellen Stoffen sowie feuchtigkeitsabsorbierenden Stoffen hinzugefügt wird, und das Austauschintervall der Duftstoffe etc. kann einfach und effektiv gemessen werden, dadurch dass sie mit einem Messsensor für das Diffusionsmaterial 2 ausgestattet ist, der am Ausstoßweg (P2) des Filterkanals (C), in dem die Filterkonstruktion 1 installiert ist, installiert wird und den durch die Filterkonstruktion 1 hindurchgehenden Luftstrom misst.

### Bezugszeichenliste:

- 1:: Filterkonstruktion
- 2:: Messsensor für das Diffusionsmaterial
- 3:: Kontrollbereich
- 4:: Anzeigebereich
- C:: Filterkanal
- 10:: 1. Faltbereich
- 20:: 2. Faltbereich
- 30:: Abschlussbereich
- 21:: Einsatzbereich
- 40:: Diffusionselement
- 41:: funktionales Diffusionsmaterial
- 43:: Kassette
- 45:: Aufnahmekammer

## Patentansprüche

1. Filterkonstruktion (1), **dadurch gekennzeichnet, dass** sie einen 1. Faltbereich (10), der aus zickzackförmigen Falten kontinuierlich gebildet wird;
einen 2. Faltbereich (20), der mit obigem 1. Faltbereich (10) direkt verbunden wird, aus zickzackförmigen Falten kontinuierlich gebildet wird und niedriger geformt ist als obiger 1. Faltbereich (10), um einen Einsatzbereich (21) zu formen;
zwei Abschlussbereiche (30), die mit beiden Schnittstellen in Faltrichtung des obigen 1. Faltbereichs (10) sowie des 2. Faltbereichs (20) verbunden sind; sowie
ein Diffusionselement (40), das in obigen Einsatzbereich (21) eingesetzt wird, umfasst und der durch obigen 2. Faltbereich (20) gefilterte Luftstrom durch obiges Diffusionselement (40) hindurchgeht.

2. Filterkonstruktion nach Anspruch 1, **dadurch gekennzeichnet, dass** obiges Diffusionselement (40) von obigem 1. Faltbereich (10) sowie zwei Abschlussbereichen (30) umschlossen wird.

3. Filterkonstruktion nach Anspruch 1 oder 2, **dadurch gekennzeichnet, dass** obiges Diffusionselement (40) zwischen obigen zwei Abschlussbereichen (30) fest eingesteckt ist.

4. Filterkonstruktion nach einem der voranstehenden Ansprüche, **dadurch gekennzeichnet, dass** obiges Diffusionselement (40) an mehr als einem obigen 1. Faltbereich (10) sowie Abschlussbereich (30) mit Befestigungsmitteln befestigt wird.

5. Filterkonstruktion nach einem der voranstehenden Ansprüche, **dadurch gekennzeichnet, dass** obige Befestigungsmittel aus Klettstoff (Velcro), beidseitigem Klebeband oder Klebstoff bestehen.

6. Filterkonstruktion nach einem der voranstehenden Ansprüche, **dadurch gekennzeichnet, dass** obiges Diffusionselement (40) in Filtrierrichtung des Luftstroms nicht weiter hervorspringt als obiger 1. Faltbereich (10) oder obiger Abschlussbereich (30).

7. Filterkonstruktion nach einem der voranstehenden Ansprüche, **dadurch gekennzeichnet, dass** obiges Diffusionselement (40) funktionales Diffusionsmaterial (41), das durch den Luftstrom diffundiert wird, sowie eine Kassette (43) umfasst, die innen obiges funktionales Diffusionsmaterial (41) aufnimmt und an deren Oberfläche mehrere durchgehende Löcher (43a) geformt sind.

8. nach einem der voranstehenden Ansprüche, **dadurch gekennzeichnet, dass** obiges funktionales Diffusionsmaterial (41) aus Duftstoffen, antibakteriellen Stoffen oder feuchtigkeitsabsorbierenden Stoffen besteht.

9. Filterkonstruktion nach einem der voranstehenden Ansprüche, **dadurch gekennzeichnet, dass** obige Kassette (43) innen mehr als 2 voneinander getrennte Aufnahmekammern (45a, 45b) bietet, damit jeweils unterschiedliches obiges funktionales Diffusionsmaterial (21) aufgenommen werden kann.

10. Filterkonstruktion nach einem der voranstehenden Ansprüche, **dadurch gekennzeichnet, dass** die zickzackförmigen Falten des obigen 1. Faltbereichs (10) sowie des 2. Faltbereichs (20) in der Höhe an der Seite des obigen Einsatzbereichs (21) jeweils gleich sind und an der anderen Seite des obigen Einsatzbereichs (21) in der Höhe alle gleich sind.

11. Filtersystem, **dadurch gekennzeichnet, dass** es eine Filterkonstruktion (1) nach irgendeinem der Ansprüche 1 bis 10;
einen Messsensor (2) für das Diffusionsmaterial, der an einer Seite des Filterkanals, in dem obige Filterkonstruktion (1) installiert ist, installiert wird und den durch obige (1) hindurchgehenden Luftstrom misst;
einen Kontrollbereich (3), in den die Messwerte des obigen Messsensors (2) für das Diffusionsmaterial eingegeben werden; sowie
einen Anzeigebereich (4), der durch obigen Kontrollbereich (3) obige Messwerte anzeigt, umfasst.

## Claims

1. Filter structure (1), **characterized in that** it comprises a first fold region (10) which is formed continuously from zigzag-shaped folds;
a second fold region (20) which is directly connected to the above first fold region (10), is formed continuously from zigzag-shaped folds, and is of lower form than the above first fold region (10) so as to form an insertion region (21);
two end regions (30) which are connected to both interfaces in the fold direction of the above first fold region (10) and of the second fold region (20); and
a diffusion element (40) which is inserted into the above insertion region (21), and the air stream filtered by the above second fold region (20) passes through the above diffusion element (40).

2. Filter structure according to Claim 1, **characterized in that** the above diffusion element (40) is surrounded by the above first fold region (10) and two end regions (30).

3. Filter structure according to Claim 1 or 2, **characterized in that** the above diffusion element (40) is inserted fixedly between the above two end regions (30).

4. Filter structure according to one of the preceding claims, **characterized in that** the above diffusion element (40) is fastened by fastening means to more than one above first fold region (10) and end region (30) .

5. Filter structure according to one of the preceding claims, **characterized in that** the above fastening means consist of Velcro, two-sided adhesive tape or glue.

6. Filter structure according to one of the preceding claims, **characterized in that** the above diffusion element (40) does not project further than the above first fold region (10) or the above end region (30) in the filtering direction of the air stream.

7. Filter structure according to one of the preceding claims, **characterized in that** the above diffusion element (40) comprises functional diffusion material (41), which is diffused through the air stream, and a cartridge (43), which accommodates the above functional material (41) on the inside and on whose surface multiple through-holes (43a) are formed.

8. Filter structure according to one of the preceding claims, **characterized in that** the above functional diffusion material (41) consists of fragrances, antibacterial substances or moisture-absorbing substances.

9. Filter structure according to one of the preceding claims, **characterized in that** the above cartridge (43) provides more than two mutually separate accommodating chambers (45a, 45b) on the inside in order that in each case different above functional diffusion material (21) can be accommodated.

10. Filter structure according to one of the preceding claims, **characterized in that** the zigzag-shaped folds of the above first fold region (10) and of the second fold region (20) are in each case at the same height on the side of the above insertion region (21) and are all at the same height on the other side of the above insertion region (21).

11. Filter system, **characterized in that** it comprises a filter structure (1) according to any of Claims 1 to 10;
a measurement sensor (2) for the diffusion material, which is installed on a side of the filter channel in which the above filter structure (1) is installed and measures the air stream passing through the above filter structure (1);
a control region (3) in which the measurement values of the above measurement sensor (2) for the diffusion material are entered; and
a display region (4) which displays the above measurement values by way of the above control region (3).

## Revendications

1. Structure de filtre (1), **caractérisée en ce qu'**elle comprend une première zone de pliage (10) constituée de manière continue de plis en zigzag ;
une deuxième zone de pliage (20), qui est reliée directement avec la première zone de pliage (10) mentionnée ci-dessus, qui est constituée de manière continue de plis en zigzag et qui est réalisée plus bas que la première zone de pliage (10) mentionnée ci-dessus, afin de former une zone d'insertion (21) ;
deux zones terminales (30) qui sont reliées avec les deux interfaces dans la direction de pliage de la première zone de pliage (10) mentionnée ci-dessus ainsi que de la deuxième zone de pliage (20) ; ainsi que
un élément de diffusion (40) qui est inséré dans la zone d'insertion (21) mentionnée ci-dessus et le flux d'air filtré par la deuxième zone de pliage (20) mentionnée ci-dessus traverse l'élément de diffusion (40) mentionné ci-dessus.

2. Structure de filtre selon la revendication 1, **caractérisée en ce que** l'élément de diffusion (40) mentionné ci-dessus est entouré par la première zone de pliage (10) mentionnée ci-dessus ainsi que par deux zones terminales (30).

3. Structure de filtre selon la revendication 1 ou 2, **caractérisée en ce que** l'élément de diffusion (40) mentionné ci-dessus est emboîté fermement entre deux zones terminales (30) mentionnées ci-dessus.

4. Structure de filtre selon l'une des revendications précédentes, **caractérisée en ce que** l'élément de diffusion (40) mentionné ci-dessus est fixé sur plus d'une première zone de pliage (10) mentionnée ci-dessus ainsi qu'une zone terminale (30) avec des moyens de fixation.

5. Structure de filtre selon l'une des revendications précédentes, **caractérisée en ce que** les moyens de fixation mentionnés ci-dessus sont constitués d'un matériau de type velcro, d'une bande adhésive double face ou d'un adhésif.

6. Structure de filtre selon l'une des revendications précédentes, **caractérisée en ce que** l'élément de diffusion (40) mentionné ci-dessus ne dépasse pas, dans la direction de filtrage du flux d'air, plus loin que la première zone de pliage (10) mentionnée ci-dessus ou la zone terminale (30) mentionnée ci-dessus.

7. Structure de filtre selon l'une des revendications précédentes, **caractérisée en ce que** l'élément de diffusion (40) mentionné ci-dessus comprend un matériau de diffusion fonctionnel (41) qui est diffusé à travers le flux d'air, ainsi qu'une cassette (43) qui loge en son intérieur le matériau de diffusion fonctionnel (41) mentionné ci-dessus et sur la surface de laquelle plusieurs trous traversants (43a) sont réalisés.

8. Structure de filtre selon l'une des revendications précédentes, **caractérisée en ce que** le matériau de diffusion fonctionnel (41) mentionné ci-dessus est constitué de substances aromatiques, de matériaux anti-bactériens ou de matériaux absorbant l'humidité.

9. Structure de filtre selon l'une des revendications précédentes, **caractérisée en ce que** la cassette (43) mentionnée ci-dessus comporte, en son intérieur, plus de 2 chambres de logement (45a, 45b) séparées entre elles, afin de pouvoir loger dans chacune d'elles un matériau de diffusion fonctionnel (21) différent mentionné ci-dessus.

10. Structure de filtre selon l'une des revendications précédentes, **caractérisée en ce que** les plis en zigzag de la première zone de pliage (10) mentionnée ci-dessus ainsi que de la deuxième zone de pliage (20) sont respectivement égaux en hauteur sur le côté de la zone d'insertion (21) mentionnée ci-dessus et sont tous égaux en hauteur sur l' autre côté de la zone d'insertion (21) mentionnée ci-dessus.

11. Système de filtrage **caractérisé en ce qu'**il comprend une structure de filtre (1) selon l'une quelconque des revendications 1 à 10 ;
un capteur de mesure (2) pour le matériau de diffusion, qui est installé sur un côté du canal de filtrage, dans lequel la structure de filtre (1) mentionnée ci-dessus est installée et qui mesure le flux d'air traversant la structure de filtre (1) mentionnée ci-dessus ;
une zone de contrôle (3) dans laquelle les valeurs de mesure du capteur de mesure (2) mentionné ci-dessus pour le matériau de diffusion sont entrées ; ainsi que
une zone d'affichage (4) qui affiche les valeurs de mesure par l'intermédiaire de la zone de contrôle (3) mentionnée ci-dessus.
